# FASCICULE DE BREVET EUROPEEN

(11) **EP 1 583 446 B1**
(45) Date de publication et mention de la délivrance du brevet: **24.05.2006**
(21) Numéro de dépôt: 03809997.4
(22) Date de dépôt: 17.12.2003
(51) Int. Cl.: A47J 31/06, A47J 31/40

(54) **DISPOSITIF ET MACHINE POUR L'EXTRACTION D'UNE SUBSTANCE POUR LA PRODUCTION DE BOISSON**
VORRICHTUNG UND MASCHINE ZUM EXTRAHIEREN EINER SUBSTANZ FÜR DIE ZUBEREITUNG EINES GETRÄNKES
SUBSTANCE-EXTRACTION DEVICE AND MACHINE FOR PRODUCING DRINKS

(30) Priorité: 15.01.2003 FR 0350003
(43) Date de publication de la demande: 12.10.2005
(73) Titulaire: UNIC S.A.S., 06510 Carros (FR)
(72) Inventeur: LEVI, Jean-Pierre, Cabinet Hautier, 24 rue Masséna, F-06000Nice (FR); LEVI, Mario, Cabinet Hautier, 24 rue Masséna, F-06000 Nice (FR)
(74) Mandataire: Decobert, Jean-Pascal
(86) Numéro de dépôt international: PCT/FR2003/050185
(87) Numéro de publication internationale: WO 2004/064583

(56) Documents cités:
- FR-A- 534 031
- FR-A- 547 071
- US-A1- 2002 002 913

## Description

La présente invention concerne un dispositif d'extraction d'une substance pour la production de boisson comportant une pluralité de chambres d'infusion.

Elle concerne également une machine intégrant le dispositif selon l'invention.

L'invention trouvera tout particulièrement son application pour la production de boissons de type café express, produites par infusion sous pression d'eau chaude d'une mouture de café.

Plus précisément, l'invention pourra être appliquée à des machines à café aptes à utiliser des conditionnements de substance à infuser (mouture de café en particulier) sous forme de dosettes en papier filtre.

La variété des demandes des consommateurs (cafés de différentes origines, café décaféiné, etc...) ainsi que les soucis de productivité ont amené les fabricants de machines à café à proposer des machines permettant la fabrication d'une pluralité de cafés express.

Dans ce cadre, le document EP-A-1 219 216 présente un dispositif automatique pour l'extraction d'une substance telle une mouture de café, qui présente suivant un mode particulier de réalisation deux chambres d'infusion parallèles et alimentées distinctement par deux conduits d'alimentation en eau chaude.

Une telle machine permet la fabrication simultanée de plusieurs boissons, mais implique une multiplication des moyens nécessaires à cet effet, suivant le nombre de chambres d'infusion réalisé. En particulier, les commandes électriques et les circuits d'arrivée d'eau chaude doivent être multipliés pour tenir compte du nombre de chambres d'infusion.

En outre, selon cette antériorité, la multiplication du nombre de chambres d'infusion entraîne une adaptation générale de la machine à café remettant en cause l'intégralité de sa conception et de sa fabrication.

Le document FR-A-547 071 décrit (voir figures 3-6) un dispositif d'extraction selon le préambule de la revendication indépendante 1.

La présente invention constitue un progrès technique important au regard de l'art antérieur connu dans le domaine considéré.

La présente invention concerne un dispositif d'extraction d'une substance pour la production de boissons selon la revendication indépendante 1.

Des modes préférés de réalisation sont décrits dans les revendications dépendantes.

L'invention concerne également une machine pour la production de boissons à partir de substance à infuser comprenant une source d'alimentation en eau chaude et comportant un dispositif de l'invention.

Les dessins ci-joints sont donnés à titre d'exemples et ne sont pas limitatifs de l'invention. Ils représentent seulement un mode de réalisation de l'invention et permettront de la comprendre aisément.
Les figures 1 à 3 présentent respectivement les vues de face, de côté et en perspective d'une machine de fabrication de boisson du type café express suivant un premier mode de réalisation.
Les figures 4 à 6 illustrent respectivement des vues de côté, de face et en perspective d'une machine de production de boisson du type café express dans une deuxième mode de réalisation dans lequel un dispositif de l'invention est intégré au niveau d'une bouche de sortie d'alimentation en eau chaude, alors qu'une autre bouche d'alimentation en eau chaude subsiste avec un dispositif de filtre et de porte filtre classique à une seule chambre d'infusion.
Les figures 7 et 8 illustrent un mode particulier de réalisation du système d'ouverture et de fermeture des chambres d'infusion du dispositif.
La figure 9 est une vue éclatée du dispositif de l'invention.
Les figures 10 à 12 illustrent trois cas de fonctionnement du dispositif de l'invention avec deux chambres d'infusion.
La figure 13 et la figure 14 montrent plus précisément le fonctionnement du dispositif de l'invention en vue partielle au niveau d'une chambre d'infusion.

Pour la description qui suit, on décrit un mode de réalisation de l'invention s'appliquant à l'utilisation de conditionnements d'une substance à infuser (telle de la mouture de café) sous forme de dosettes constituées en papier filtre.

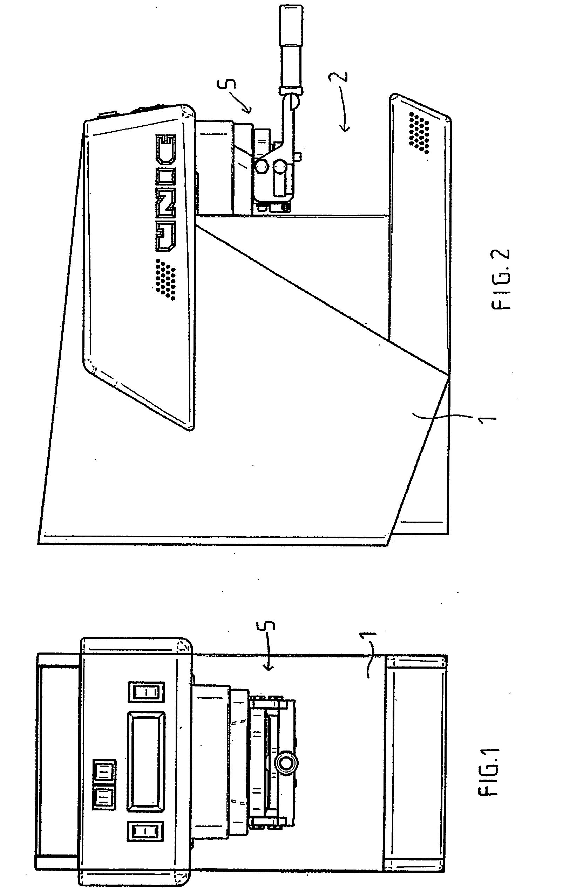

Dans le cas des figures 1 à 3, un dispositif 5 selon l'invention est rapporté sur une machine à café 1 de conception classique.

En particulier, une telle machine comprend un corps 3 apte à contenir les moyens de production d'eau chaude et de sa mise sous pression, ainsi que les moyens électromécaniques pour la distribution de l'eau chaude.

La machine à café 1 comprend également de façon classique une façade 2 apte à recevoir différents moyens de commande sous forme de boutons pour les fonctions de mise en route, et d'activation de la pompe notamment.

Tel que représenté aux figures 1 à 3, le dispositif 5 selon l'invention peut coopérer avec une machine à café 1 de conception courante au niveau de la bouche de sortie en eau chaude sous pression existante pour alimenter de façon connue un système de filtre et de porte filtre aptes à recevoir la substance à infuser et réalisant la chambre d'infusion unique habituelle.

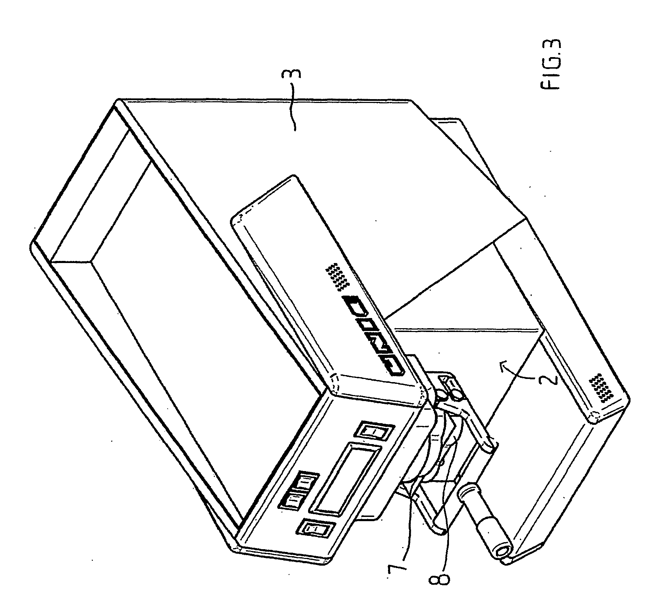

La figure 3 montre d'une façon générale qu'il est possible au moyen du dispositif 5 de l'invention de constituer une pluralité de chambres d'infusion 7, 8, et ce par coopération avec une seule bouche d'alimentation en eau chaude.

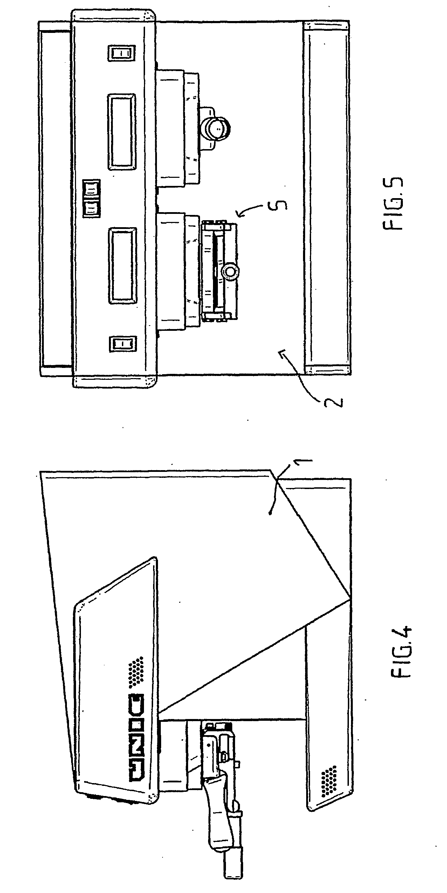

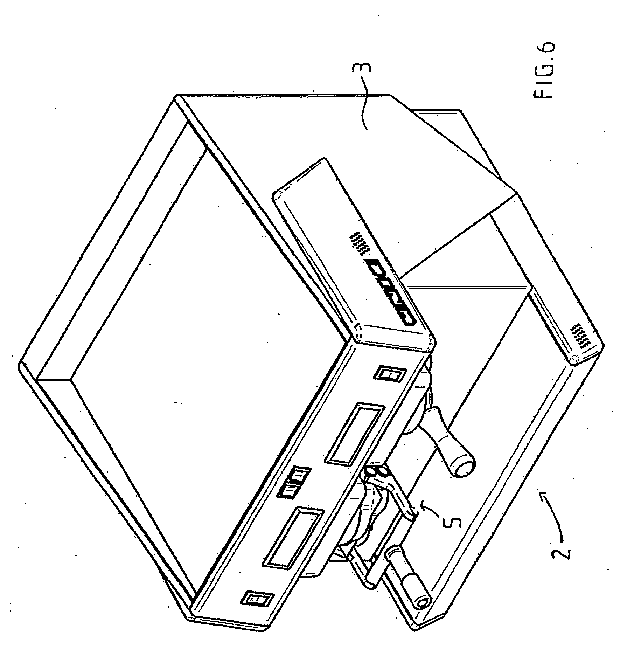

Les figures 4 à 6 montrent un autre exemple d'application du dispositif de l'invention à une machine à café 1 comprenant deux bouches de sortie d'eau chaude permettant habituellement de fonctionner chacune avec une seule chambre d'infusion.

Suivant l'exemple indiqué, un dispositif 5 est implanté au niveau d'une des bouches en alimentation en eau chaude alors qu'un système traditionnel est conservé au niveau de l'autre bouche.

Dans chacun des cas, on notera que le reste de la machine à café 1 et en particulier les moyens de commande et de distribution du circuit d'eau chaude n'ont pas été modifiés.

Pour parvenir à ce résultat le dispositif d'extraction 5 selon l'invention a la caractéristique de comporter une interface 6 de connexion à une entrée d'alimentation 4 en eau chaude, et des moyens de répartition de l'eau chaude entre les chambres d'infusion 7, 8 où une substance à infuser 13a, 13b est présente.

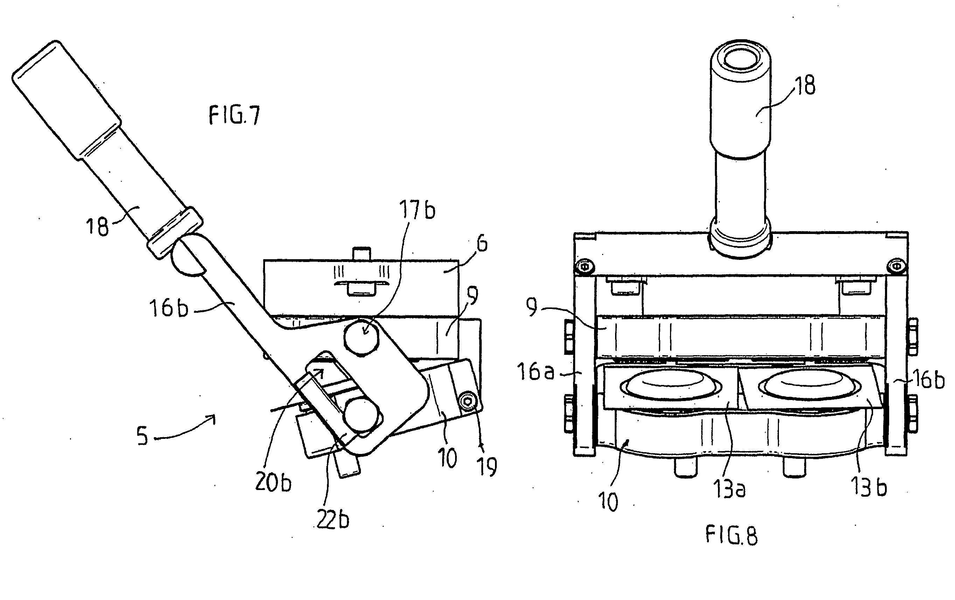

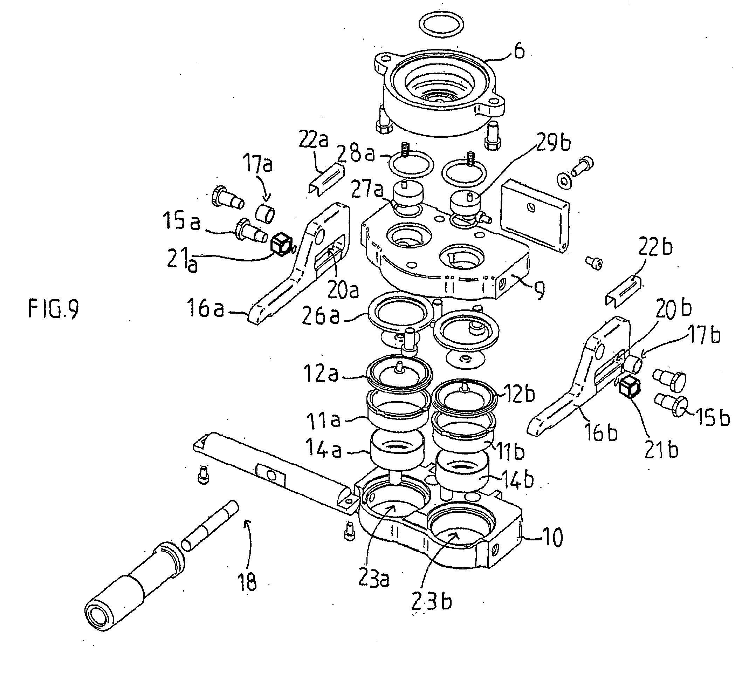

La figure 7 montre un exemple d'interface de connexion 6 tout comme la figure 9 qui l'illustre en vue éclatée. En particulier, l'interface de connexion 6 peut se présenter sous forme d'un bloc comportant une ouverture centrale apte à être raccordée avec une entrée d'alimentation 4 (ou bouche d'alimentation) de la machine à café. On pourra en particulier utiliser des moyens de fixation courants tels que des vis pour la fixation de l'interface 6 sur le corps de la machine à café 1.

Bien entendu, on adaptera la configuration de fixation (dimension extérieure et positionnement des vis) de l'interface 6 au type de machine à café 1 sur laquelle on souhaite se connecter.

Le dispositif d'extraction comporte en outre des moyens de répartition de l'eau chaude entre les différentes chambres d'infusion 7, 8 où une substance à infuser 13a, 13b est présente.

Les exemples illustrés par les figures s'appliquent au cas où on constitue deux chambres d'infusion 7, 8 au niveau d'un dispositif 5. Cependant, ce cas n'est pas limitatif.

Pour permettre de répartir l'eau chaude dans les chambres d'infusion où la substance à infuser 13a, 13b est présente sans modifications fondamentales de la machine à café 1, le dispositif 5 comprend pour chaque chambre d'infusion 7, 8 des moyens de détection de présence de substance à infuser 13a, 13b, et des moyens d'ouverture de l'arrivée d'eau chaude dans la chambre d'infusion 7, 8 sur détection de présence de substance à infuser 13a, 13b.

Ainsi, de façon automatique, le circuit d'entrée d'eau chaude dans une chambre d'infusion 7, 8 est ouvert de par la simple présence de la substance à infuser 13a, 13b.

Suivant le mode de réalisation illustré aux figures, et en particulier aux figures 9 à 14, les moyens de détection et les moyens d'ouverture de l'arrivée d'eau chaude de chaque chambre d'infusion 7, 8 sont constitués par un organe mobile 29a, 29b.

De façon avantageuse, l'organe mobile 29a, 29b reçoit à son extrémité inférieure un système de douchette 24a, 24b classique apte à répartir l'eau chaude entrante sur la substance à infuser 13a, 13b.

En position de repos, l'organe mobile 29a, 29b a une extrémité inférieure faisant saillie dans le volume intérieur de la chambre d'infusion 7, 8.

Cette position de repos est assurée par défaut par l'intermédiaire de moyens élastiques de conception courante, et par exemple par des ressorts 25a, 25b positionnés dans un logement dans l'interface de connexion 6 et permettant de plaquer l'organe mobile 29a, 29b sur le pourtour de l'arrivée d'eau chaude dans la chambre d'infusion 7, 8.

Pour assurer l'étanchéité dans cette position, l'organe mobile 29a, 29b reçoit un joint 27a, 27b, par exemple de type torique permettant, dans cette configuration, de fermer l'arrivée d'eau chaude de la chambre d'infusion 7, 8 considérée.

L'organe mobile 29a, 29b peut prendre une autre position apte à ouvrir l'arrivée d'eau chaude dans la chambre d'infusion 7, 8.

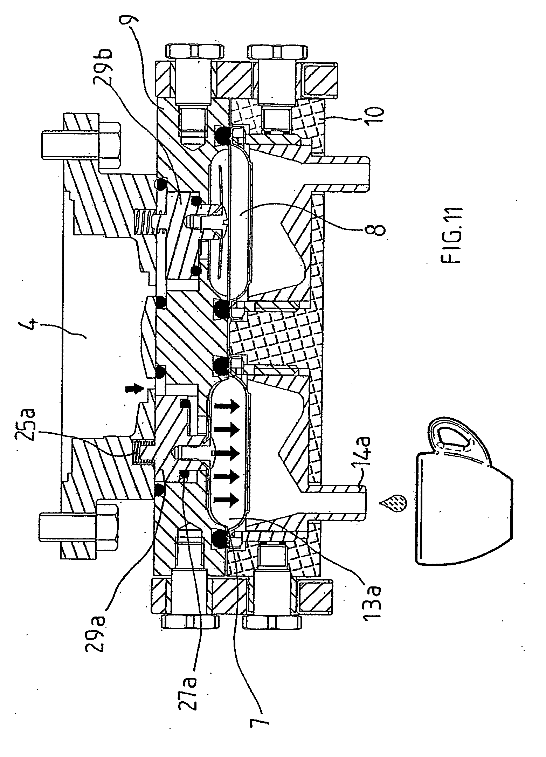

C'est en particulier le cas au niveau de la figure 11 pour la chambre d'infusion 7.

A ce niveau, la présence d'une substance à infuser 13a a engendré un appui de l'extrémité inférieure de l'organe mobile 29a sur la surface supérieure de la substance à infuser en dosette 13a ce qui a provoqué le retrait de l'organe mobile 29a du volume de la chambre d'infusion 7. Ce faisant, le ressort 25a a été contraint. Par ailleurs, le retrait de l'organe mobile 29a a provoqué le décollement du joint d'étanchéité 27a de surface d'application et ce pour ouvrir l'arrivée d'eau chaude dans la chambre d'infusion 7 tel que représenté par les flèches montrant le passage de l'eau.

L'eau chaude issue de l'entrée de l'alimentation 4 au niveau de l'interface de connexion 6 passe au travers de l'arrivée d'eau chaude de la chambre d'infusion 7 pour infuser la substance 13a contenue. Il s'ensuit un écoulement de la boisson produite au niveau d'un bec d'écoulement 14a prolongeant une partie d'entonnoir de réception de la boisson.

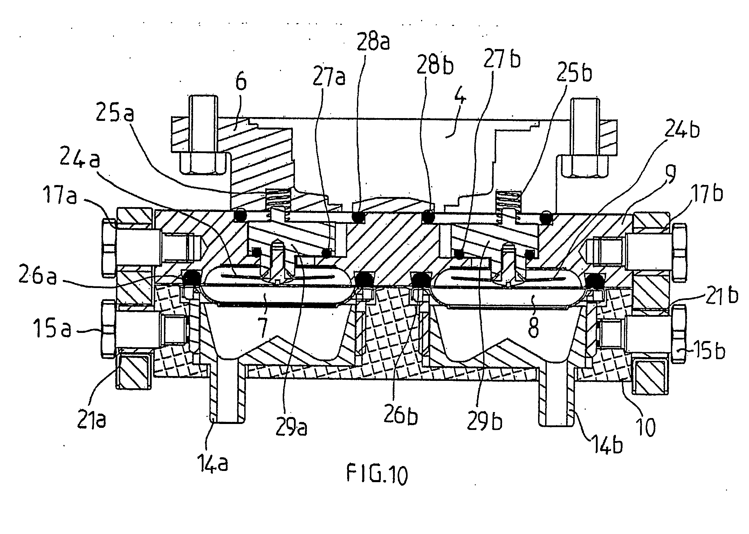

Les figures 10 à 12 illustrent trois configurations de fonctionnement de deux chambres d'infusion 7, 8 du dispositif 5.

Dans le cas de la figure 10, les deux chambres d'infusion 7, 8 sont en position inactive et aucune substance à infuser en dosette 13a, 13b n'est présente. En conséquence, les organes mobiles 29a, 29b sont tous deux déployés dans le volume interne de chaque chambre d'infusion 7, 8 en fermant l'arrivée d'eau chaude.

Dans le cas de la figure 11, une substance à infusion en dosette 13a est présente dans la chambre d'infusion 7. Par contre, la chambre d'infusion 8 est restée vide. En conséquence, seul l'organe mobile 29a est rétracté pour ouvrir le circuit d'arrivée d'eau chaude. L'organe mobile 29b reste en position de fermeture de l'arrivée d'eau chaude de la chambre 8 correspondante.

Il s'ensuit la production d'une seule boisson au niveau de la chambre d'infusion 7.

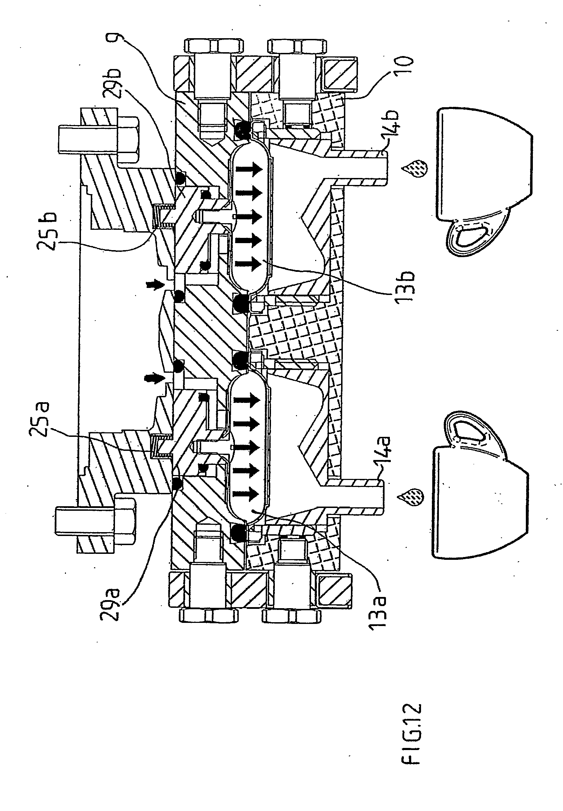

Une autre alternative est présentée à la figure 12 où des substances à infuser en dosette 13a, 13b sont présentes dans chacune des chambres d'infusion 7, 8. En conséquence, les deux organes mobiles 29a, 29b sont rétractés de façon à ouvrir l'arrivée d'eau chaude de chaque chambre d'infusion 7, 8. En conséquence, une boisson est produite au niveau de chaque chambre d'infusion.

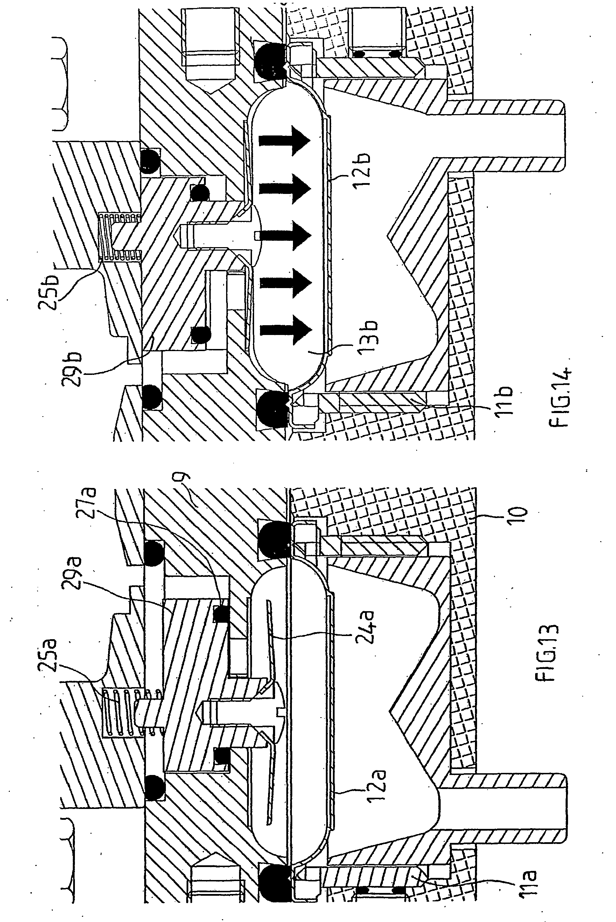

Les figures 13 et 14 montrent des vues partielles agrandies du mode de réalisation préféré de l'invention illustré aux figures 9 à 12. En particulier, la figure 13 montre une chambre d'infusion en position de fermeture et de non fonctionnement alors que la figure 14 montre une chambre d'infusion en position d'ouverture d'arrivée d'eau chaude pour la production d'une boisson.

Toujours en référence aux figures, on présente ci-après un exemple de réalisation de l'ouverture et de la fermeture des chambres d'infusion 7, 8 pour l'admission ou le retrait de la substance à infuser en dosette 13a, 13b.

En se référant plus particulièrement aux figures 7 à 9, on observe que la pluralité de chambres d'infusion 7, 8 est formée pour partie (partie supérieure) dans un élément fixe 9, et pour partie (partie inférieure) dans un élément mobile 10. C'est le mouvement de l'élément mobile 10 qui assure l'ouverture ou la fermeture d'une chambre d'infusion 7, 8.

La partie des chambres d'infusion 7, 8 présente dans l'élément fixe 9 est constituée par des cavités formées dans la face inférieure de l'élément fixe 9 et forme la zone d'application de l'eau chaude sur la substance à infuser 13a, 13b. C'est à ce niveau que la douchette 24a, 24b est reçue.

L'élément mobile 10 comporte une pluralité de logements 23a, 23b chacun apte à recevoir en partie inférieure une bec d'écoulement 14a, 14b muni d'un entonnoir et, en partie supérieure un support de coupelle 11 a, 11 b portant une coupelle 12a, 12b de réception de la substance à infuser en dosette 13a, 13b.

De façon avantageuse, la position en hauteur de chaque support de coupelle 11 a, 11 b est réglable en particulier pour régler finement la pression exercée par le pourtour de la coupelle sur le pourtour de la dosette 13a, 13b en position de fermeture en regard de l'élément fixe 9.

A titre d'exemple, chaque support 11a, 11b peut comporter un filetage coopérant avec un taraudage intérieur du logement 23a, 23b pour former une glissière hélicoïdale apte à monter ou descendre le support de coupelle 11a, 11b. La fixation définitive en position du support 11a, 11b est réalisée par l'intermédiaire d'une vis de pression 15a, 15b. Cette configuration apparaît en détail au niveau des figures 13 et 14. En ce qui concerne l'actionnement en ouverture ou en fermeture de l'élément mobile 10, il peut être réalisé par le biais d'un levier 18 actionné manuellement par l'utilisateur.

Les éléments fixe et mobile 9, 10 sont reliés par un pivot 19 et également liés cinématiquement avec deux bras 16a, 16b solidaires du levier 18.

Plus particulièrement, chaque bras 16a, 16b est monté pivotant sur l'élément fixe 9 par l'intermédiaire de deux liaisons pivot 17a, 17b bien représentées en figure 9. Par rapport à l'élément mobile 10, les bras 16a, 16b comprennent chacun un trou oblong 20a, 20b coopérant en translation avec un doigt de guidage 21 a, 21 b monté sur l'élément mobile 10.

A titre avantageux, le doigt de guidage 21 a, 21 b a une section rectangulaire et est monté pivotant par rapport à l'élément mobile 10, par exemple par l'intermédiaire d'une vis 15a, 15b.

A titre avantageux, la vis de montage de chaque doigt de guidage 21 a, 21 b est la même vis 15a, 15b que celle utilisée pour maintenir en position les supports de coupelles 11a, 11 b.

Compte tenu du frottement existant entre la paroi du trou oblong 20a, 20b et la surface des doigts de guidage 21 a, 21 b, il peut être utile de rapporter un revêtement de glissement 22a, 22b sur au moins une portion de la paroi des trous oblongs 20a, 20b.

Il s'agira en particulier d'un revêtement ayant un coefficient de frottement faible, et une bonne résistance à l'usure relativement aux matériaux utilisés pour constituer les bras 26a, 16b.

En position d'ouverture des chambres d'infusion 7, 8, le levier 18 est relevé et permet l'admission des dosettes 13a, 13b, tel que cela est représenté aux figures 7 et 8. Une action de l'utilisateur sur le levier 18 pour entraîner sa rotation vers le bas permet la fermeture des chambres d'infusion 7, 8 pour parvenir à une configuration de fonctionnement présenté aux figures 10 à 14.

On notera que l'orientation vers le bas du levier 18 pour réaliser l'ouverture permet une facilité d'application de l'effort de fermeture de la part de l'utilisateur et garantit une bonne fermeture des chambres d'infusion 7, 8 pour une étanchéité parfaite.

Bien entendu, les différents organes du dispositif 5 de l'invention et en particulier l'interface de connexion 6, l'élément fixe 9 et l'élément mobile 10 coopèrent ensemble de façon étanche par l'intermédiaire de joints représentés aux repères 26a, 26b, et 28a, 28b.

Il est également bien entendu que l'exemple illustré avec deux chambres d'infusion 7, 8 pourrait être reproduit avec un autre nombre de chambres d'infusion 7, 8 sans sortir du cadre de la présente invention.

### REFERENCES

- 1.: Machine à café
- 2.: Façade
- 3.: corps
- 4.: Entrée d'alimentation
- 5.: Dispositif
- 6.: Interface
- 7.: Chambre d'infusion
- 8.: Chambre d'infusion
- 9.: Elément fixe
- 10.: Elément mobile
- 11a, 11b.: Support de coupelles
- 12a, 12b.: Coupelles
- 13a, 13b.: Substance à infuser en dosette
- 14a, 14b.: Bec d'écoulement
- 15a, 15b.: Vis de montage
- 16a, 16b.: Bras
- 17a, 17b.: Liaison pivot
- 18.: Levier
- 19.: Pivot
- 20a, 20b.: Trou oblong
- 21 a, 21 b.: Doigt de guidage
- 22a, 22b.: Revêtement de glissement
- 23a, 23b.: Logement
- 24a, 24b.: Douchette
- 25a, 25b.: Ressort
- 26a, 26b.: Joint
- 27a, 27b.: Joint
- 28a, 28b.: Joint
- 29a, 29b.: Organe mobile

## Revendications

1. Dispositif (5) d'extraction d'une substance pour la production de boissons, comportant une pluralité de chambres d'infusion (7, 8), comportant une interface (6) de connexion à une entrée d'alimentation en eau chaude et des moyens de répartition de l'eau chaude entre les chambres d'infusion (7, 8) où une substance à infuser est présente,
**Caractérisé par le fait que**,
Les moyens de répartition comprennent pour chaque chambre d'infusion (7, 8) des moyens de détection de présence de substance à infuser et des moyens d'ouverture de l'arrivée d'eau chaude dans la chambre d'infusion (7, 8) sur détection de présence de substance à infuser.

2. Dispositif selon la revendication 1,
**Caractérisé par le fait qu'**
II comporte, pour chaque chambre d'infusion (7, 8), un organe mobile (29a, 29b) entre :
- une position d'obturation de l'arrivée d'eau_chaude dans laquelle une extrémité de l'organe mobile (29a, 29b) est déployée dans la chambre d'infusion (7, 8),
- une position d'ouverture de l'arrivée d'eau chaude dans laquelle ladite extrémité de l'organe mobile (29a, 29b) est rétractée de la chambre d'infusion (7, 8) par appui sur la substance à infuser.

3. Dispositif selon l'une quelconque des revendication 1 à 2,
**Caractérisé par le fait que**,
Les chambres d'infusion (7, 8) sont formées pour partie dans un élément fixe (9) et pour partie dans un élément mobile (10) entre une position d'ouverture et une position de fermeture des chambres d'infusion (7, 8).

4. Dispositif selon la revendication 3,
**Caractérisé par le fait que**,
- L'élément fixe (9) et l'élément mobile (10) sont reliés par pivot (19),
- L'élément mobile (10) est actionné par un levier (18) monté en liaison pivot (17a, 17b) sur l'élément fixe et comportant au moins un trou oblong (20a, 20b) coopérant avec un doigt de guidage (21 a, 21 b) sur l'élément mobile (10).

5. Dispositif selon la revendication 4,
**Caractérisé par le fait que**,
Le doigt de guidage (21 a, 21 b) a une section rectangulaire et est monté pivotant par rapport à l'élément mobile (10).

6. Dispositif selon l'une quelconque des revendications 4 ou 5,
**Caractérisé par le fait que**,
Au moins une portion de la paroi du trou oblong (20a, 20b) comporte un revêtement de glissement (22a, 22b).

7. Dispositif selon l'une quelconque des revendications 3 à 6,
**Caractérisé par le fait que**,
L'élément mobile (10) comporte, pour chaque chambre d'infusion (7, 8) une coupelle de filtrage (12a, 12b) portée par un support (11a, 11b) réglable en hauteur dans un logement (23a, 23b) formé dans l'élément mobile (10).

8. Dispositif selon les revendications 5 et 7 en combinaison,
**Caractérisé par le fait que**,
II comporte deux chambres d'infusion (7, 8) avec chacune un support (11a, 11b) monté réglable en hauteur dans son logement (23a, 23b) par une vis de pression (15a, 15b) servant aussi au montage d'un doigt de guidage (21a, 21 b).

9. Machine pour la production de boissons à partir de substance à infuser comprenant une source d'alimentation en eau chaude,
**Caractérisée par le fait que**,
Elle comporte au moins un dispositif selon l'une quelconque des revendications 1 à 8.

## Claims

1. Device (5) for the extraction of a substance for the production of beverages, comprising multiple infusion chambers (7, 8), with an interface (6) connecting to hot water intake and means for distributing the hot water between infusion chambers (7, 8) containing a substance to be infused,
**characterised in that**,
for each infusion chamber (7, 8), the distribution means include means for detecting the presence of a
substance to be infused and means for opening the hot water intake in infusion chamber (7, 8) when the presence of the substance to be infused is detected.

2. Device according to claim 1,
**characterised in that**
it includes, for each infusion chamber (7, 8), a body (29a, 29b) mobile between:
- a hot water intake closed position in which one end of mobile body (29a, 29b) is deployed in infusion chamber (7,8),
- a hot water intake open position in which the aforementioned end of mobile body (29a, 29b) is retracted from infusion chamber (7, 8) by pressing on the substance to be infused.

3. Device according to any of claims 1 to 2,
**characterised in that**,
infusion chambers (7, 8) are formed partly in a fixed part (9) and partly in a mobile part (10) between an open position and a closed position of infusion chambers (7, 8).

4. Device according to claim 3,
**characterised in that**,
- fixed part (9) and mobile part (10) are connected by pivot (19),
- mobile part (10) is actuated by a lever (18) assembled as pivot link (17a, 17b) on fixed element and with at least one oblong hole (20a, 20b) co-acting with a guide finger (21 a, 21 b) on mobile part (10).

5. Device according to claim 4,
**characterised in that**,
guide finger (21 a, 21 b) has a rectangular section and is assembled to pivot relative to mobile part (10).

6. Device according to any of claims 4 or 5,
**characterised in that**,
at least part of the wall of oblong hole (20a, 20b) has a sliding lining (22a, 22b).

7. Device according to any of claims 3 to 6,
**characterised in that**,
for each infusion chamber (7, 8), mobile part (10) has, a filtering cup (12a, 12b) on a support (11 a, 11 b) whose height can be adjusted in a housing (23a, 23b) formed in mobile part (10).

8. Device according to claims 5 and 7 in combination,
**characterised in that**,
it comprises two infusion chambers (7, 8) each one with a support (11 a, 11 b) fitted so as to be height adjustable in its housing (23a, 23b) using a set screw (15a, 15b) also used to assemble a guide finger (21a, 21b).

9. Machine for producing drinks from a substance to be infused including a source of hot water,
**characterised in that**,
it comprises at least one device according to any of claims 1 to 8.

## Patentansprüche

1. Vorrichtung (5) zum Extrahieren einer Substanz für die Herstellung von Getränken, die mehreren Brühkammern (7, 8) besitzt sowie eine Schnittstelle (6) zum Anschluss an eine Warmwasserzuführleitung und Mittel zum Verteilen des Warmwassers auf die Brühkammern (7, 8) in denen sich eine zu brühende Substanz befindet,
**gekennzeichnet dadurch, dass**
die Mittel zum Verteilen des Warmwassers an jede Brühkammer (7, 8) Sonden besitzen, die das Vorhandensein der zu brühenden Substanz detektieren sowie Mittel zum Öffnen der Warmwasserzufuhr in die Brühkammer (7, 8) nach Erkennung des Vorhandenseins der zu brühenden Substanz.

2. Vorrichtung gemäß Anspruch 1,
**gekennzeichnet dadurch, dass**
sie für jede Brühkammer (7, 8) ein bewegliches Organ (29a, 29b) aufweist, das
- zwischen einer Stellung, in der die Warmwasserzufuhr gesperrt ist, und in der ein Ende des beweglichen Organs (29a, 29b) in die Brühkammer (7, 8) eingefahren ist,
- und einer Stellung, in der die Warmwasserzufuhr geöffnet ist, und in der das genannte Ende des beweglichen Organs (29a, 29b) aus der Brühkammer (7, 8) nach Berühren der zu brühenden Substanz zurückgezogen wird, bewegt wird.

3. Vorrichtung gemäß einem der Ansprüche 1 bis 2,
**gekennzeichnet dadurch, dass**
die Brühkammern (7, 8) zum Teil in einem nicht beweglichen Element (9) und zum Teil in einem beweglichen Element (10) zwischen einer geschlossenen und einer geöffneten Stellung der Brühkammer ausgebildet sind.

4. Vorrichtung gemäß Anspruch 3,
**gekennzeichnet dadurch, dass**
- das nicht bewegliche Element (9) und das bewegliche Element (10) durch ein Gelenk (19) miteinander verbunden sind,
- das bewegliche Element (10) durch einen Hebel (18) betätigt wird, der mit dem nicht beweglichen Element über ein Gelenk (17a, 17b) verbunden ist und der mindestens ein Langloch (20a, 20b) besitzt, das mit einem Führungsstift (21 a, 21 b) am beweglichen Element (10) zusammenwirkt.

5. Vorrichtung gemäß Anspruch 4,
**gekennzeichnet dadurch, dass**
der Führungsstift (21 a, 21 b) einen rechteckigen Querschnitt besitzt und in bezug auf das bewegliche Element (10) schwenkbar angeordnet ist.

6. Vorrichtung gemäß einem der Ansprüche 4 oder 5,
**gekennzeichnet dadurch, dass**
mindesten ein Teil der Wand des Langlochs (20a, 20b) mit einer gleitfähigen Beschichtung (22a, 22b) versehen ist.

7. Vorrichtung gemäß einem der Ansprüche 3 bis 6,
**gekennzeichnet dadurch, dass**
das bewegliche Element (10) für jede Brühkammer (7, 8) eine Filterschale (12a, 12b) besitzt, die von einem Halter (11a, 11 b) getragen wird, der höhenverstellbar in einer, im beweglichen Element (10) ausgebildeten Aufnahmeöffnung (23a, 23b) angeordnet ist.

8. Vorrichtung gemäß beiden Ansprüchen 5 und 7 gemeinsam,
**gekennzeichnet dadurch, dass**
sie zwei Brühkammern (7, 8) und für jede einen Halter (11 a, 11 b) besitzt, der in seiner Aufnahmeöffnung (23a, 23b) durch eine Druckschraube (15a, 15b) höhenverstellbar angeordnet ist, die gleichzeitig zur Montage des Führungsstifts (21 a, 21 b) dient.

9. Maschine zur Herstellung von Getränken aus zu brühenden Substanzen, die eine Warmwasserversorgung besitzt,
**gekennzeichnet dadurch, dass**
sie mindestens eine Vorrichtung gemäß einem der Ansprüche 1 bis 8 aufweist.
